# EUROPÄISCHE PATENTANMELDUNG

(11) **EP 0 845 376 A2**
(43) Veröffentlichungstag der Anmeldung: **03.06.1998**
(21) Anmeldenummer: 97120041.5
(22) Anmeldetag: 15.11.1997
(51) Int. Cl.: B60J 3/02

(54) **Sonnenblende für Fahrzeuge und Verfahren zum Herstellen einer solchen**

(30) Priorität: 02.12.1996 DE 19649801
(71) Anmelder: BECKER GROUP EUROPE GmbH, 42285 Wuppertal (DE)
(72) Erfinder: Viertel, Lothar, 66802 Altforweiler (DE); Welter, Patrick, 57730 La Chambre (FR)

(57) **Zusammenfassung**

Beschrieben wird eine Sonnenblende für Fahrzeuge mit einem aus aufgeschäumten Kunststoff, insbesondere PU (Polyurethan) gebildeten Sonnenblendenkörper (1) und zumindest einem im Schaummaterial des Sonnenblendenkörpers (1) durch Umschäumen eingebetteten Lagerkörper (6) für eine Sonnenblendenachse (2) sowie einem Versteifungsmittel für den Sonnenblendenkörper (1). Um bei einer solchen Sonnenblende einen Sonnenblendenkörper (1) mit hoher Stabilität und Verwindungssteifigkeit zu schaffen, ist erfindungsgemäß vorgesehen, daß als Versteifungsmittel zumindest eine nicht dehnfähige Materialbahn (9) vorgesehen ist, die sich an zumindest einer Breitseite des Sonnenblendenkörpers (1) oberflächenseitig erstreckt und innig mit dem Kunststoffmaterial des Sonnenblendenkörpers (1) verbunden ist.

## Beschreibung

Die Erfindung bezieht sich auf eine Sonnenblende für Fahrzeuge mit einem aus aufgeschäumten Kunststoff, insbesondere PU gebildeten Sonnenblendenkörper mit zumindest einem im Schaummaterial des Sonnenblendenkörpers durch Umschäumen eingebetteten Lagerkörper für eine Sonnenblendenachse sowie einem Versteifungsmittel für den Sonnenblendenkörper. Die Erfindung bezieht sich ferner auf ein Verfahren zum Herstellen einer Sonnenblende.

Sonnenblenden für Fahrzeuge sind in den verschiedensten Ausführungsformen bekannt. Bei einer weitverbreiteten Ausführungsform besteht der Sonnenblendenkörper aus PU-Schaum und weist eine darin eingelagerte Verstärkungseinlage und zumindest einen Lagerkörper für eine Sonnenblendenachse auf. Eine Verstärkungseinlage besteht üblicherweise aus einem Drahtrahmen, der dem umlaufenden Rand des Sonnenblendenkörpers benachbart in diesem eingelagert ist. Daneben kommen aber auch Kunststoffrahmen oder Kunststoff-Stahlkombinationen als Verstärkungseinlagen zum Einsatz. An der Verstärkungseinlage ist zumindest ein Lagerkörper befestigt, der eine Sonnenblendenachse einendig aufnimmt. Das andere Ende der Sonnenblendenachse sitzt in einem Lagerbock, der an der Fahrzeugkarosserie befestigbar ist.

Im Regelfall bestehen die Verstärkungseinlagen für aus PU-Schaum gebildete Sonnenblendenkörper aus einem Drahtrahmen mit der Aufgabe, einen Sonnenblendenkörper zu verstärken und auszusteifen. Dieser Aufgabe werden die herkömmlichen Verstärkungseinlagen nicht in zufriedenstellender Weise gerecht. Schon bei kleineren, für den Einsatz in Personenkraftfahrzeugen bestimmten Sonnenblenden kommt es bei einer Klappbewegung des Sonnenblendenkörpers von der Gebrauchslage in die Nichtgebrauchslage, wie auch umgekehrt zu einer Verwindung des Sonnenblendenkörpers, insbesondere dann, wenn der Sonnenblendenkörper nicht mittig erfaßt wird. Bei größeren Sonnenblenden, die für den Einsatz in Autobussen oder dgl. Großraumfahrzeugen bestimmt sind und Längenabmessungen von 600 bis 1.100 mm aufweisen können, ist die Verwindungssteifigkeit noch schwächer ausgeprägt, obgleich hier sehr schwere Verstärkungsrahmen aus Draht mit Zwischenverstrebungen eingesetzt werden. Die Instabilität des Sonnenblendenkörpers führt auch zu einer unschönen Faltenbildung eines den Sonnenblendenkörper oftmals umgebenen Umhüllungsmaterials und immer wieder zu Reklamationen.

Aus dem DE-GM 1 936 364 ist eine Sonnenblende mit einem Sonnenblendenkörper aus geschäumten Polyurethan bekanntgeworden. In dem Sonnenblendenkörper können beliebig federelastisch nachgiebige Verstärkungs- und Befestigungsvorrichtungen eingeschäumt sein. Eine mechanische, federelastische Verstärkung des Sonnenblendenkörpers soll außerdem dadurch ermöglicht werden, daß daran außenseitig Vertiefungen angebracht sind, wodurch bei Ablauf des Schaumprozesses eine Materialverdichtung und somit eine höhere Materialfestigkeit zustande kommen soll. In die Vertiefungen können auch Verstärkungselemente mittels Kleben, Schweißen, Nieten nachträglich eingesetzt werden.

Der Erfindung liegt hiernach die Aufgabe zugrunde, die aufgezeigten Nachteile einer herkömmlichen Sonnenblende abzustellen und eine Sonnenblende mit einem Sonnenblendenkörper zu schaffen, der sich durch eine hohe Stabilität und Verwindungssteifigkeit auszeichnen soll.

Zur Lösung dieser Aufgabe ist erfindungsgemäß vorgesehen, daß als Versteifungsmittel zumindest eine nicht dehnfähige Materialbahn vorgesehen ist, die sich an zumindest einer Breitseite des Sonnenblendenkörpers oberflächenseitig erstreckt und innig mit dem Kunststoffmaterial des Sonnenblendenkörpers verbunden ist.

Durch diese erfindungsgemäße Maßnahme konnte eine überraschend hohe Qualitätsverbesserung erzielt werden, und zwar insbesondere im Hinblick auf Biege- und Verwindungssteifigkeit eines Sonnenblendenkörpers. Die Erfindung erlaubt es, den herkömmlichen Aufbau eines Sonnenblendenkörpers unverändert zu lassen, um nicht gravierend in die Produktion einer laufenden Serie eingreifen zu müssen. In diesem Fall bleibt es bei der Einlagerung der üblichen Verstärkungseinlage und der Vorteil der Erfindung beschränkt sich auf eine Qualitätsverbesserung. Wie Versuche gezeigt haben, kann aber zumindest bei Sonnenblenden mit kleineren Abmessungen wie sie in Personenkraftwagen zum Einsatz kommen, gänzlich auf die Einlagerung einer Verstärkungseinlage verzichtet werden, so daß die Erfindung neben dem Vorteil einer Qualitätsverbesserung auch den Vorteil einer erheblichen Kosteneinsparung erbringt. Aber auch bei großen Blenden bietet die Erfindung beträchtliche Kostenvorteile, indem auf eine Verstärkungseinlage verzichtet oder auf eine abgemagerte Verstärkungseinlage ohne Zwischenbügel, Verstrebungen und dgl. zurückgegriffen wird. Der Verzicht auf eine Verstärkungseinlage oder die Verwendung einer abgemagerten Verstärkungseinlage erbringt nicht nur eine Kostenersparnis sondern auch eine, heute als sehr wichtig eingestufte Gewichtsersparnis. Versuche und Berechnungen haben ergeben, daß eine Kosten- und Gewichtseinsparung von jeweils mehr als 50 % erzielt werden kann, bei Sonnenblendenkörpern gleicher Abmessungen. Es hat sich aber gezeigt, daß auch bei der Dickenabmessung noch ein Einsparungspotential vorhanden ist, denn die überraschend hohe Stabilität der erfindungsgemäßen Sonnenblende läßt auch eine Dickenreduzierung der Sonnenblendenkörper zu.

Die Vorteile der erfindungsgemäßen Maßnahme in bezug auf Formstabilität, Gewichts- und Kosteneinsparung werden durch weitere Vorteile ergänzt, wobei zunächst eine besondere Oberflächengüte der Sonnenblendenkörper hervorzuheben ist. Durch Einsparung einer Verstärkungseinlage oder wesentlicher Teile einer solchen entwickelt der expandierende PU-Schaum auch weniger Turbulenzen, so daß sich auch weniger Lunker ausbilden können, was wiederum zu einer verbesserten Oberflächengüte führt. Die erfindungsgemäße Materialbahn bietet einen weiteren Vorteil in bezug auf den Einsatz von Trennmittel, weil ein Trennmittel nur noch im geringeren Umfang erforderlich ist, denn der PU-Schaum haftet über wesentliche Bereiche nicht mehr unmittelbar an der Schäumform an. Durch die Einsparung einer Verstärkungseinlage oder wesentlicher Teile derselben können natürlich auch Positionierungsstifte in der Schäumform in Fortfall kommen.

Die Haftung der zumindest einen Materialbahn am Sonnenblendenkörper wird vorteilhafterweise dadurch gewährleistet, daß die Materialbahn zumindest bereichsweise vom Kunststoffmaterial des Sonnenblendenkörpers durchsetzt oder durchdrungen ist.

Vorteilhafterweise erstreckt sich über jede Breitseite des Sonnenblendenkörpers eine damit innig verbundene Materialbahn. Von dieser Maßnahme kann u. U. dann Abstand genommen werden, wenn von einer Breitseite des Sonnenblendenkörpers eine Vertiefung für eine Spiegelbaueinheit ausgeht. Jedoch ist es ohne weiteres denkbar, auch auf dem Boden der Vertiefung eine Materialbahn in inniger Verbindung mit dem Kunststoffmaterial anzuordnen, um dadurch den hier relativ dünnen Wandungsbereich zu stabilisieren.

Wie Versuche gezeigt haben, ist es günstig, daß die Flächenerstreckung der bzw. jeder Materialbahn nicht wesentlich kleiner ist als die Flächenerstreckung einer Breitseite des Sonnenblendenkörpers.

Gemäß einer wesentlichen Weiterbildung der Erfindung ist vorgesehen, daß die bzw. jede Materialbahn aus einem Papierzuschnitt besteht. Es war schon mehr als überraschend feststellen zu können, daß mittels einfacher Papierzuschnitte eine wesentliche Qualitätsverbesserung in bezug auf Festigkeit und Verwindungssteifigkeit erzielt werden konnte. Die ersten durchgeführten Versuche wurden unter Verwendung von handelsüblichem Schreibpapier mit bestem Erfolg durchgeführt. Es empfiehlt sich ein schwachsaugendes Papier mit einem Flächengewicht von 50 g/m² bis 110 g/m², vorzugsweise 80 g/m² zu verwenden.

Der erfindungsgemäße Sonnenblendenkörper kann, um den ästhetischen Anforderungen der Käuferschaft zu entsprechen eine Umhüllung aus Kunststoffolien, Textilmaterial- oder Lederzuschnitten aufweisen.

Das Verfahren zum Herstellen der Sonnenblende wird unter Verwendung einer zweiteiligen, ein Formnest für den Sonnenblendenkörper aufweisenden Schäumform durchgeführt, wobei in das Formnest der zunächst offenen Schäumform zumindest ein Lagerkörper für eine Sonnenblendenachse eingebracht und positioniert wird und sodann eine flüssige Kunststoffmischung eingebracht wird, die nach dem Schließen der Schäumform im Formnest aufschäumt und erhärtet. Das erfindungsgemäße Verfahren zeichnet sich dadurch aus, daß vor dem Einbringen der flüssigen Kunststoffmischung in das Formnest an zumindest einer für die Bildung einer Breitseite des Sonnenblendenkörpers bestimmten Formnestwandung eine dünne, nicht dehnfähige Materialbahn angebracht wird. Die Materialbahn kann durch einen punktuellen Kleberauftrag an der Formnestwandung gehalten sein. Gemäß einer anderen Ausgestaltung kann die Materialbahn aber auch durch ein an die Schäumform angelegtes Vakuum an der Formnestwandung gehalten werden. Als Materialbahn wird bevorzugterweise eine aus Papier bestehende Materialbahn verwendet, wobei ein nur gering saugfähiges Papier mit einem Flächengewicht von 50 g/m² bis 110 g/m², vorzugsweise 80 g/m² verwendet werden sollte.

Beim Aufschäumen des in das Formnest eingegebenen Kunststoffmaterials, dringt dieses zumindest geringfügig in die dünne Materialbahn ein, wobei es zum innigen Verbund zwischen dem Kunststoffmaterial und der Materialbahn kommt. Da die Materialbahn unelastisch ist, wirkt sie einer Biegebelastung ebenso entgegen wie auch einem Versuch, den Sonnenblendenkörper zu verwinden.

Gemäß einer weiteren Ausgestaltung der Erfindung kann schließlich noch vorgesehen sein, daß der Sonnenblendenkörper nach dem Aushärten des Kunststoffmaterials mit Kunststoffolien, Textilmaterial- oder Leder-Zuschnitten in einem nachfolgenden Arbeitsgang umkleidet wird.

Ausführungsbeispiele der Erfindung werden nachfolgend anhand der Zeichnungen näher erläutert, und es zeigen:
- Fig. 1: eine erste teilweise aufgebrochen dargestellte Sonnenblende in Ansicht,
- Fig. 2: eine zweite Sonnenblende in Ansicht,
- Fig. 3: eine dritte Sonnenblende in Ansicht,
- Fig. 4: einen Schnitt A - A nach Fig. 3 und
- Fig. 5: ein Schäumwerkzeug für die Herstellung einer Sonnenblende nach Fig. 3.

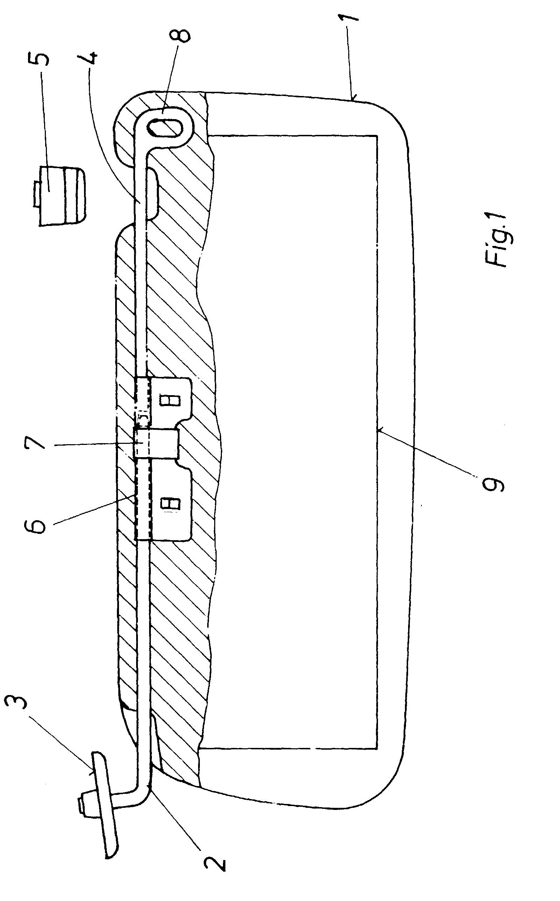

Die Sonnenblende nach Fig. 1 ist für den Einsatz in Personenkraftwagen bestimmt und umfaßt einen Sonnenblendenkörper 1, eine Sonnenblendenachse 2 mit Hauptlagerböckchen 3 und eine Gegenlagerachse 4 mit Gegenlagerböckchen 5.

Der Sonnenblendenkörper 1 ist aus PU-Schaum gebildet und weist einen ungeschäumten Lagerkörper 6 auf, in dessen Lageraugen von der einen Seite her die Sonnenblendenachse 2 und von der anderen Seite her die Gegenlagerachse 4 eingreifen. Die Sonnenblendenachse 2 wird von einer am Lagerkörper 6 angeordneten Rastfeder 7 belastet, die dazu dient, den Sonnenblendenkörper 1 zumindest in seiner unter dem Fahrzeughimmel anliegenden Nichtgebrauchslage zu halten.

Der Sonnenblendenkörper 1 ist um den langen Schenkel der Sonnenblendenachse 2 schwenkbar, zwecks Überführung von der Nichtgebrauchslage in die Gebrauchslage und umgekehrt. Der kurze Schenkel der Sonnenblendenachse 2 ist drehbeweglich im Hauptlagerböckchen 3 gelagert, um den Sonnenblendenkörper 1 zu einer Fahrzeugseitenscheibe schwenken zu können. In diesem Fall wird die Gegenlagerachse 4 aus der Lageraufnahme des Gegenlagerböckchens 5 herausgeklipst. Die Gegenlagerachse 4 ist starr im Sonnenblendenkörper 1 eingelagert und ein angeformtes Auge 8 stellt die Unverdrehbarkeit sicher.

Die Besonderheit der Sonnenblende nach Fig. 1 besteht darin, daß zumindest die dem Betrachter zugewandte Breitseite des Sonnenblendenkörpers 1 eine nicht dehnfähige Materialbahn 9 in inniger Verbindung mit dem Sonnenblendenkörper-Material trägt, die bevorzvgterweise aus einem Papierzuschnitt besteht. Vorzugsweise trägt der Sonnenblendenkörper 1 an beiden Breitseiten eine sich darauf oberflächenseitig erstreckende Materialbahn 9. Die Materialbahn 9 sollte, wie in Fig. 1 gezeigt, nicht wesentlich kleiner als die Breitseiten des Sonnenblendenkörpers sein.

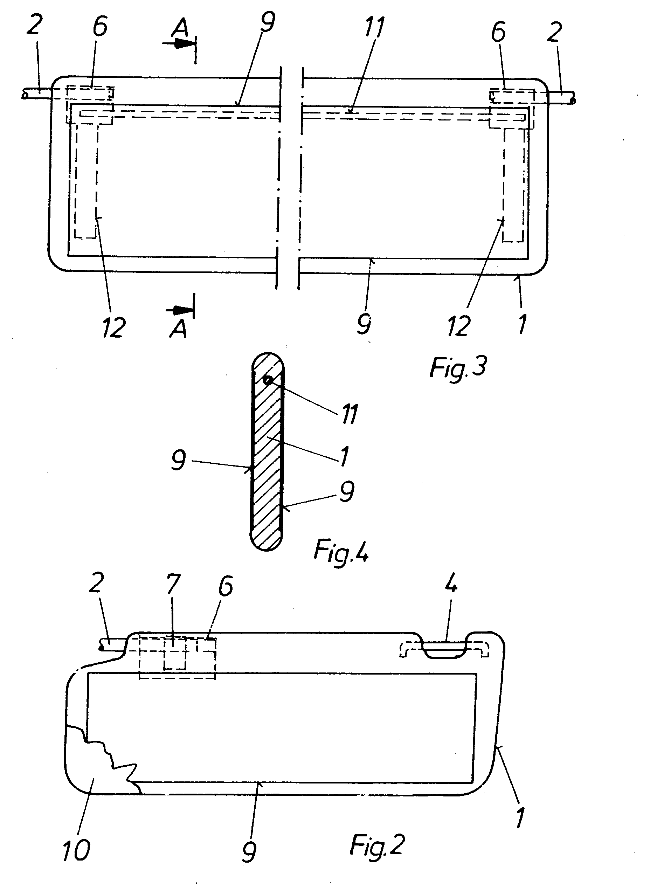

Die in Fig. 2 gezeigte Sonnenblende weist die gleichen Hauptbestandteile, wie die anhand von Fig. 1 beschriebene Sonnenblende auf. Hier erstreckt sich die Gegenlagerachse 4 nicht bis zum Lagerkörper 6 und dieser ist völlig unsymmetrisch in einem Endbereich des Sonnenblendenkörpers 1 eingelagert. Der Lagerkörper 6 nimmt die Sonnenblendenachse 2 und die die Sonnenblendenachse klemmende Rastfeder 7 auf.

Auch bei der Sonnenblende nach Fig. 2 besteht die Besonderheit darin, daß anstelle eines sonst üblichen Drahtrahmens oder dgl. ein Versteifungsmittel vorgesehen ist, das aus einer nicht dehnfähigen Materialbahn 9 besteht, die bevorzugterweise an jeder Breitseite des Sonnenblendenkörpers 1 angeordnet ist und sich darauf oberflächenseitig erstreckt und innig mit dem Kunststoffmaterial des Sonnenblendenkörpers 1 verbunden ist.

Fig. 2 zeigt weiter, daß der Sonnenblendenkörper 1 eine Umhüllung 10 aufweisen kann, die in der einfachsten Ausführung aus Kunststoffolien, in einer gehobenen Ausführung aus Textilmaterial und in einer Luxusausführung aus echtem Leder besteht.

Die Sonnenblende nach Fig. 3 und 4 ist für den Einsatz in Lastkraftwagen und dgl. bestimmt und weist eine Länge zwischen etwa 600 - 1.100 mm auf. Der Sonnenblendenkörper 1 dieser Sonnenblende weist an beiden Stirnendbereichen jeweils einen Lagerkörper 6 eingelagert auf, jeweils bestimmt zur Lagerung von Sonnenblendenachsen 2. Mit den Lagerkörpern 6 ist eine Stange 11 verbunden, die aus einem Drahtstück bestehen kann. Ferner erstrecken sich von jedem Lagerkörper 6 zur unteren Längskante des Sonnenblendenkörpers 1 ausgerichtete Versteifungsstege 12, die im Sonnenblendenkörper-Material eingeschäumt sind.

Als wesentliches Versteifungsmittel für den Sonnenblendenkörper 1 dienen aber auch hier wieder oberflächenseitig mit den Breitseiten des Sonnenblendenkörpers 1 innig verbundene, bevorzugterweise aus Papier bestehende Materialbahnen 9.

Es hat sich gezeigt, daß sowohl nicht imprägniertes als auch imprägniertes, z. B. Transparentpapier verwenden werden kann wie aber auch unelastische Folien und Filme. Die besten Versuchsergebnisse wurden aber bisher mit handelsüblichem Schreibpapier erzielt.

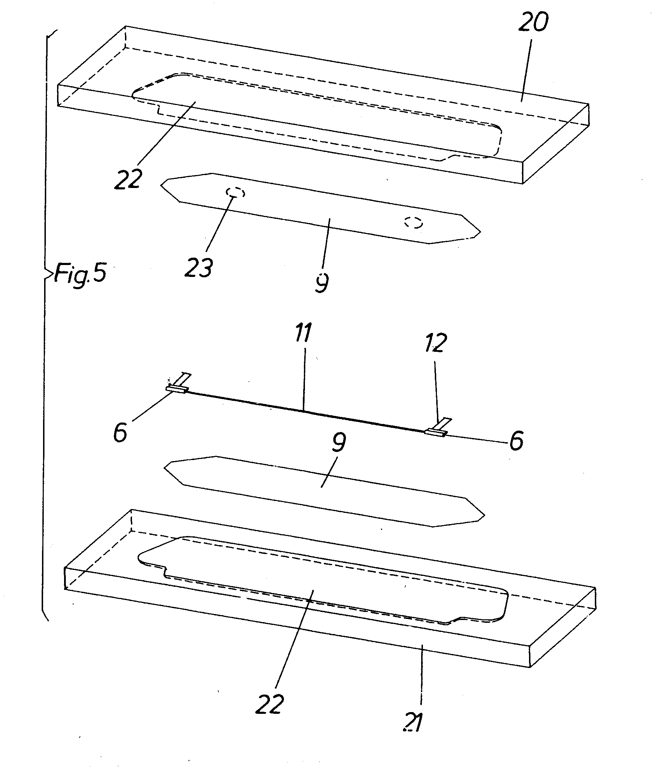

Fig. 5 zeigt in vereinfachter Darstellungsmanier ein Schäumwerkzeug für die Herstellung eines Sonnenblendenkörpers. Das Schäumwerkzeug umfaßt eine obere und untere Werkzeughälfte 20, 21 zwischen denen ein Formnest 22 ausgebildet ist. Bei der Fertigung eines Sonnenblendenkörpers 1 wird in die untere Werkzeughälfte 21 zunächst die aus den Lagerkörpern 6, Stange 11 und Versteifungsstegen 12 (hier bezogen auf das Ausführungsbeispiel nach Fig. 3) bestehende Einheit sowie eine Materialbahn 9 eingelegt. Eine zweite Materialbahn 9 wird der oberen Werkzeughälfte 20 zugeführt und in dieser z. B. mittels Klebepunkten 23 fixiert. In das Formnest 22 der unteren Werkzeughälfte 21 wird sodann eine dosierte Menge einer flüssigen, klebrigen Zweikomponentenmischung eingefüllt, wonach die Werkzeughälften zusammengefahren und verriegelt werden. Der Schaum reagiert nun innerhalb des Formnests aus und drückt die Materialbahnen 9 gegen die Formnestwandungen, wodurch sich eine innige untrennbare Verbindung zwischen dem Schaummaterial und den Materialbahnen 9 einstellt.

## Patentansprüche

1. Sonnenblende für Fahrzeuge mit einem aus aufgeschäumten Kunststoff, insbesondere PU (Polyurethan) gebildeten Sonnenblendenkörper (1) und zumindest einem im Schaummaterial des Sonnenblendenkörpers (1) durch Umschäumen eingebetteten Lagerkörper (6) für eine Sonnenblendenachse (2) sowie einem Versteifungsmittel für den Sonnenblendenkörper (1), dadurch gekennzeichnet, daß als Versteifungsmittel zumindest eine nicht dehnfähige Materialbahn (9) vorgesehen ist, die sich an zumindest einer Breitseite des Sonnenblendenkörpers (1) oberflächenseitig erstreckt und innig mit dem Kunststoffmaterial des Sonnenblendenkörpers (1) verbunden ist.

2. Sonnenblende nach Anspruch 1, dadurch gekennzeichnet, daß die zumindest eine Materialbahn (9) zumindest bereichsweise von Kunststoffmaterial des Sonnenblendenkörpers (1) durchsetzt ist.

3. Sonnenblende nach Anspruch 1 oder 2, dadurch gekennzeichnet, daß sich über jede Breitseite des Sonnenblendenkörpers (1) eine damit innig verbundene Materialbahn (9) erstreckt.

4. Sonnenblende nach wenigstens einem der Ansprüche 1 bis 3, dadurch gekennzeichnet, daß die Flächenerstreckung der bzw. jeder Materialbahn (9) nicht wesentlich kleiner ist als die Flächenerstreckung einer Breitseite des Sonnenblendenkörpers (1).

5. Sonnenblende nach wenigstens einem der Ansprüche 1 bis 4, dadurch gekennzeichnet, daß die bzw. jede Materialbahn (9) aus einem Papierzuschnitt besteht.

6. Sonnenblende nach Anspruch 5, dadurch gekennzeichnet, daß ein Papier mit einem Flächengewicht von 50/g² bis 110 g/², vorzugsweise 80 g/m² verwendet wird.

7. Sonnenblende nach wenigstens einem der Ansprüche 1 bis 6, dadurch gekennzeichnet, daß der Sonnenblendenkörper (1) eine Umhüllung (10) aus Kunststoffolien, Textilmaterial- oder Lederzuschnitten aufweist.

8. Verfahren zum Herstellen einer Sonnenblende nach den Ansprüchen 1 bis 7, mit einer zweiteiligen, ein Formnest (22) für den Sonnenblendenkörper (1) aufweisenden Schäumform (20, 21), wobei in das Formnest (22) der zunächst offenen Schäumform (20, 21) zumindest ein Lagerkörper (6) für eine Sonnenblendenachse (2) eingebracht und positioniert wird und sodann eine flüssige Kunststoffmischung eingebracht wird, die nach dem Schließen der Schäumform (20, 21) im Formnest (22) aufschäumt und erhärtet, dadurch gekennzeichnet, daß vor dem Einbringen der flüssigen Kunststoffmischung in das Formnest (22) an zumindest einer für die Bildung einer Breitseite des Sonnenblendenkörpers (1) bestimmten Formnestwandung eine nicht dehnfähige Materialbahn (9) angebracht wird.

9. Verfahren nach Anspruch 8, dadurch gekennzeichnet, daß die zumindest eine Materialbahn (9) durch punktuellen Kleberauftrag an der Formnestwandung gehalten wird.

10. Verfahren nach Anspruch 8, dadurch gekennzeichnet, daß die zumindest eine Materialbahn (9) durch ein an die Schäumform (20, 21) angelegtes Vakuum an der Formnestwandung gehalten wird.

11. Verfahren nach wenigstens einem der Ansprüche 8 - 10, dadurch gekennzeichnet, daß eine aus Papier bestehende Materialbahn (9) verwendet wird.

12. Verfahren nach Anspruch 11, dadurch gekennzeichnet, daß ein nur gering saugfähiges Papier mit einem Flächengewicht von 50 g/m² bis 110 g/m², vorzugsweise 80 g/m² verwendet wird.

13. Verfahren nach wenigstens einem der Ansprüche 8 bis 12, dadurch gekennzeichnet, daß der Sonnenblendenkörper (1) nach dem Aushärten des Kunststoffmaterials mit Kunststoffolien, Textilmaterial- oder Leder-Zuschnitten umkleidet wird.
